# FASCICULE DE BREVET EUROPEEN

(11) **EP 3 129 329 B1**
(45) Date de publication et mention de la délivrance du brevet: **10.11.2021**
(21) Numéro de dépôt: 15718538.0
(22) Date de dépôt: 02.04.2015
(51) Int. Cl.: C03C 17/36

(54) **SUBSTRAT MUNI D'UN EMPILEMENT A PROPRIETES THERMIQUES**
SUBSTRAT MIT EINEM STAPEL MIT THERMISCHEN EIGENSCHAFTEN
SUBSTRATE HAVING A STACK WITH THERMAL PROPERTIES

(30) Priorité: 08.04.2014 FR 1453094
(43) Date de publication de la demande: 15.02.2017
(73) Titulaire: SAINT-GOBAIN GLASS FRANCE, 92400 Courbevoie (FR)
(72) Inventeur: GEORGES, Benoît, Jumeirah Lakes towers, Plot W, DUBAI (AE); GOUGOUSSIS, Christos, Nanjing 210004 (CN)
(74) Mandataire: Saint-Gobain Recherche
(86) Numéro de dépôt international: PCT/FR2015/050855
(87) Numéro de publication internationale: WO 2015/155444

(56) Documents cités:
- EP-A1- 0 717 014
- EP-A1- 2 338 851
- EP-A1- 2 653 306
- WO-A1-2004/058661
- WO-A1-2012/118471
- WO-A1-2015/023292
- WO-A1-2015/023303
- WO-A2-2014/055267
- FR-A1- 2 949 774

## Description

L'invention concerne un vitrage comprenant un substrat transparent revêtu d'un empilement de couches minces comprenant plusieurs couches fonctionnelles pouvant agir sur le rayonnement solaire et/ou le rayonnement infrarouge de grande longueur d'onde. L'invention concerne plus particulièrement l'utilisation de tels vitrages comme vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Les demandes de brevet WO 2015/023292 A1, WO WO2015/023303 A1, WO 2014/055267 A2, EP 2 653 306 A1 et EP 2 338 8 51 A1 décrivent des vitrages comprenant un substrat transparent revêtu d'un empilement de couches minces comportant successivement à partir du substrat une alternance de deux couches métalliques fonctionnelles à base d'argent et de trois revêtements antireflets, chaque revêtement antireflet comportant au moins une couche diélectrique, de manière à ce que chaque couche métallique fonctionnelle soit disposée entre deux revêtements antireflets.

Selon les climats des pays où sont installés ces vitrages, les performances en termes de transmission lumineuse et de facteur solaire recherchées peuvent varier dans une certaine gamme.

Dans les pays où les niveaux d'ensoleillement sont élevés, il existe une demande forte de vitrage présentant une transmission lumineuse de l'ordre de 40 % et des valeurs de facteur solaire inférieures à 0,28. La transmission lumineuse est alors suffisamment faible pour supprimer l'éblouissement et suffisamment élevée pour que la diminution de la quantité de lumière pénétrant à l'intérieur de l'espace délimité par ledit vitrage ne rende pas obligatoire l'utilisation de la lumière artificielle.

Des vitrages comprenant des substrats transparents revêtus d'un empilement de couches minces comprenant deux couches fonctionnelles métalliques, chacune disposée entre deux revêtements antireflets sont connus.

Les substrats ainsi revêtus permettent d'obtenir des valeurs de transmission lumineuse et de facteur solaire dans les gammes recherchées. Cependant, l'aspect esthétique et les propriétés de réflexion de tels vitrages ne donnent pas entière satisfaction et présentent notamment les inconvénients suivants :
- des couleurs en transmission ou en réflexion extérieure non neutres, et
- des niveaux de réflexion extérieure élevés, et/ou
- des performances de contrôle solaire peu satisfaisantes telles qu'une sélectivité faible.

Selon l'invention, on entend :
- facteur solaire « g », le rapport entre l'énergie totale entrant dans le local à travers le vitrage et l'énergie solaire incidente,
- sélectivité « s », le rapport entre la transmission lumineuse et le facteur solaire TL/g.

Un compromis doit donc être trouvé entre les performances optiques, thermiques, la transparence et l'aspect esthétique. Il existe un besoin de développer un vitrage permettant de minimiser le facteur solaire, de diminuer la réflexion côté extérieur, d'améliorer la neutralité en réflexion du côté extérieur et en transmission tout en gardant une transmission lumineuse adaptée pour permettre une bonne isolation et une bonne vision.

L'invention a pour objet un vitrage tel que défini dans la revendication 1. Ce vitrage comprend notamment un substrat transparent 10 revêtu d'un empilement de couches minces comportant successivement à partir du substrat une alternance de deux couches métalliques fonctionnelles à base d'argent 40, 80 et de trois revêtements antireflets 20, 60, 100, chaque revêtement antireflet comportant au moins une couche diélectrique, de manière à ce que chaque couche métallique fonctionnelle 40, 80 soit disposée entre deux revêtements antireflets 20, 60, 100, caractérisé en ce que :
- les deux couches métalliques fonctionnelles correspondent à la première 40 et à la deuxième couche fonctionnelle métallique 80 définies en partant du substrat, l'épaisseur de la deuxième couche métallique fonctionnelle 80 est supérieure à celle de la première couche métallique fonctionnelle 40,
- la première couche métallique fonctionnelle 40 est au contact d'une sous-couche de blocage, appelée première sous-couche de blocage,
- la première sous-couche de blocage est une couche absorbante présentant une épaisseur supérieure à 1 nm,
- la première sous-couche de blocage est située au contact d'une couche diélectrique à base d'un nitrure non oxydé d'un ou plusieurs éléments choisis parmi le silicium et l'aluminium,
- la première sous-couche de blocage et, si elles sont présentes, la première surcouche de blocage, la deuxième sous-couche de blocage et/ou la deuxième surcouche de blocage ont respectivement des épaisseurs UB1, OB1, UB2, OB2 satisfaisant la relation suivante : UB1> 1,1*MAX(OB1, UB2, OB2).

L'invention a pour objet un vitrage tel que défini dans la revendication 2.

Le vitrage est de préférence destiné à des applications nécessitant que le substrat revêtu de l'empilement ait subi un traitement thermique à une température élevée tel qu'une trempe, un recuit ou un bombage.

Le vitrage de l'invention est sous forme de vitrage monolithique, feuilleté ou multiple, en particulier double vitrage ou triple vitrage.

Un vitrage feuilleté comprend au moins deux substrats rigides du type verre assemblés par au moins une feuille de polymère thermoplastique.

Un vitrage multiple comprend au moins deux substrats maintenus à distance de manière à délimiter une cavité remplie par un gaz isolant.

De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

L'empilement est de préférence positionné dans le vitrage de sorte que la lumière incidente provenant de l'extérieur traverse la première sous-couche de blocage avant de traverser la première couche métallique fonctionnelle. L'empilement n'est pas déposé sur la face du substrat définissant la paroi extérieure du vitrage mais sur la face intérieure d'un substrat.

En choisissant de monter de cette façon le vitrage, la couche de blocage absorbante est située à la fois entre l'extérieur et toutes les couches fonctionnelles à base d'argent et au contact direct de la première couche à base d'argent de l'empilement La combinaison d'une couche de blocage absorbante épaisse non susceptible d'être dégradée en dessous de la première couche fonctionnelle à base d'argent permet d'absorber plus efficacement la lumière réfléchie vers l'extérieur par les couches fonctionnelles. Il semble de manière surprenante, qu'une telle couche, placée à cet endroit permet d'obtenir la combinaison des propriétés recherchées et notamment une réflexion extérieure faible, des couleurs en réflexion extérieure neutres tout en maintenant les excellentes performances énergétiques, sans nécessiter de modifications substantielles des autres paramètres de l'empilement tels que la nature, l'épaisseur et la séquence des couches le constituant.

Dans le cas d'un vitrage monolithique ou multiple, l'empilement est de préférence déposé en face 2, c'est-à-dire qu'il se trouve sur le substrat définissant la paroi extérieure du vitrage et plus précisément sur la face intérieure de ce substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

Un vitrage feuilleté comporte au moins une structure de type premier substrat / feuille(s) / deuxième substrat. L'empilement de couches minces est positionné sur l'une au moins des faces d'un des substrats. L'empilement peut être sur la face du deuxième substrat non au contact de la feuille polymère. Ce mode de réalisation est avantageux lorsque le vitrage feuilleté est monté en double vitrage avec un troisième substrat.

Le vitrage de l'invention sous forme d'un double vitrage comprenant l'empilement positionné en face 2 permet d'atteindre notamment les performances suivantes :
- un facteur solaire g inférieur à 0,28,
- une transmission lumineuse comprise entre 35 % et 50 %, de préférence d'environ 40 %,
- une sélectivité élevée, de préférence supérieure à 1,50,
- une réflexion extérieure inférieure à 15 %,
- des couleurs neutres en transmission et en réflexion extérieure.

En modulant les épaisseurs des couches fonctionnelles et des couches de blocage, la transparence du vitrage peut être contrôlée de façon à obtenir une transmission lumineuse d'environ 40 %.

L'avantage majeur de l'invention est que l'obtention de l'aspect visuel satisfaisant avec notamment des couleurs en réflexion extérieure et en transmission esthétiquement acceptables ainsi que des valeurs de réflexion extérieure suffisamment faibles ne s'opèrent pas au détriment des performances de protection solaire.

Le choix spécifique d'une première sous-couche de blocage absorbante dans le visible présentant une épaisseur suffisante pour que cette absorption soit significative, au contact d'une couche de nitrure de silicium et/ou d'aluminium non oxydée permet d'assurer la protection de la couche de blocage. Cette couche conserve ses propriétés d'absorption même lorsque le substrat revêtu de l'empilement subit un traitement thermique.

Selon l'invention, on entend par une couche de nitrure de silicium non oxydée, une couche ne comprenant pas d'oxygène. Une telle couche peut être facilement obtenue par dépôt par pulvérisation cathodique.

Le vitrage selon l'invention, utilisé comme vitrage monolithique ou dans un vitrage multiple de type double-vitrage, présente des couleurs en réflexion extérieure neutres, agréables et douces, dans la gamme des bleus ou bleus-verts (valeurs de longueur d'onde dominante de l'ordre de 470 à 500 nanomètres). Par « couleur dans le bleu-vert » au sens de la présente invention, il faut comprendre que dans le système de mesure de couleur L*a*b*, a* est compris entre -10,0 et 0,0, de préférence entre -7,0 et 0,0 et b* est compris entre -10,0 et 0,0, de préférence entre - 7,0 et 0,0.

Le vitrage de l'invention présente des couleurs en réflexion côté extérieur dans le système de mesure de couleur L*a*b* :
- a* compris entre -5,0 et 0,0, de préférence entre -4,0 et 0,0 et/ou
- b* est compris entre -7,0 et 0,0, de préférence entre -6,0 et -1,0.

Le vitrage de l'invention présente des couleurs en transmission dans le système de mesure de couleur L*a*b* :
- a* compris entre -8,0 et 0,0, de préférence entre -7,0 et -3,0 et/ou
- b* est compris entre -7,0 et 0,0, de préférence entre -6,0 et -1,0.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », et « troisième » pour les couches fonctionnelles ou les revêtements antireflets sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

Sauf mention contraire, les épaisseurs évoquées dans le présent document sont des épaisseurs physiques, ou réelles (et non pas des épaisseurs optiques).

Les empilements de l'invention sont généralement obtenus par une succession de dépôts effectués par une technique utilisant le vide comme la pulvérisation cathodique éventuellement assistée par champ magnétique.

Les deux couches métalliques fonctionnelles correspondent à la première 40 et à la deuxième couche fonctionnelle métallique 80 définies en partant du substrat. Les épaisseurs des couches métalliques fonctionnelles (40, 80) augmentent en partant du substrat, cela signifie que l'épaisseur de la deuxième couche métallique fonctionnelle 80 est supérieure à celle de la première couche métallique fonctionnelle 40.

Selon des modes de réalisation avantageux de l'inventions, les couches métalliques fonctionnelles satisfont une ou plusieurs des conditions suivantes :
- le rapport de l'épaisseur d'une couche fonctionnelle métallique sur l'épaisseur de la précédente est supérieur ou égale à 0,90,
- l'épaisseur de chaque couche fonctionnelle est comprise entre 6 et 26 nm, de préférence entre 6 et 24 nm en incluant ces valeurs,
- l'épaisseur de la première couche métallique fonctionnelle 40 est par ordre de préférence croissant comprise de 7 à 14 nm, de 8 à 13 nm,
- l'épaisseur de la seconde couche métallique fonctionnelle 80 est par ordre de préférence croissant comprise de 10 à 17 nm, de 11 à 16 nm,
- l'épaisseur totale des couches métalliques fonctionnelles 40, 80 est comprise entre 15 et 30 nm en incluant ces valeurs, de préférence entre 20 et 25 nm.

Ces plages d'épaisseur pour les couches métalliques fonctionnelles sont les plages pour lesquelles les meilleurs résultats sont obtenus pour une transmission lumineuse en double vitrage d'environ 40 %, une réflexion lumineuse basse et facteur solaire plus bas permettant d'obtenir une sélectivité élevée avec en plus une couleur en réflexion de l'extérieur neutre.

Les couches de blocages ont traditionnellement pour fonction de protéger les couches fonctionnelles d'une éventuelle dégradation lors du dépôt du revêtement antireflet supérieur et lors d'un éventuel traitement thermique à haute température, du type recuit, bombage et/ou trempe. Une couche de blocage disposée sous une couche fonctionnelle en direction du substrat est appelée sous-couche de blocage « UB ». Une couche de blocage disposée sur la couche fonctionnelle à l'opposé du substrat est appelée surcouche de blocage « OB ».

Concernant les couches de blocage situées au-contact d'une couche fonctionnelle, les qualifications « première » et « deuxième », sont définies en partant du substrat porteur de l'empilement et en se référant à la qualification « première » et « deuxième » de la couche fonctionnelle au contact de laquelle les couches de blocage se situent. Par exemple, la deuxième couche fonctionnelle peut comporter une ou deux couches de blocage choisies parmi une deuxième sous-couche de blocage et une deuxième surcouche de blocage.

Selon l'invention, la première sous-couche de blocage est une couche absorbante. Une couche est absorbante lorsque la variation de l'absorption lumineuse dans le visible induite par la couche absorbante est supérieure à 2 %, voire supérieure à 4 %. L'absorption lumineuse (Abs) est définie par l'équation suivante :
Abs = 100 - TL - RL
avec TL correspondant à la transmission lumineuse dans le visible en % et RL correspondant à la réflexion lumineuse dans le visible en %.

La variation d'absorption lumineuse ΔAbs est obtenue en mesurant la transmission lumineuse et la réflexion lumineuse côté extérieur d'un substrat revêtu d'un empilement ne comprenant pas la couche absorbante et la transmission lumineuse et la réflexion lumineuse coté extérieur d'un même substrat revêtu d'un empilement comprenant la couche absorbante. La variation est obtenue en calculant ΔAbs = - ΔTL - ΔRL.

La première sous-couche absorbante est de préférence choisie parmi les couches métalliques à base d'un métal ou d'un alliage métallique ou les couches de nitrure métallique d'un ou plusieurs éléments choisis parmi le titane, le niobium, le nickel et le chrome telles qu'une couche de Ti, TiN, Nb, NbN, Ni, NiN, Cr, CrN, NiCr, NiCrN.

D'une manière générale, toutes les caractéristiques lumineuses présentées dans la présente description sont obtenues selon les principes et méthodes décrits dans la norme européenne EN 410 se rapportant à la détermination des caractéristiques lumineuses et solaires des vitrages utilisés dans le verre pour la construction. De manière conventionnelle, les indices de réfraction sont mesurés à une longueur d'onde de 550 nm. Les facteurs de transmission lumineuse TL et de réflexion lumineuse RL sont mesurés sous l'illuminant D65 avec un champ de vision de 2°.

Selon des modes de réalisation avantageux de l'invention, la ou les couches de blocage satisfont une ou plusieurs des conditions suivantes :
- chaque couche métallique fonctionnelle 40, 80 est au contact d'au moins une couche de blocage choisie parmi une sous-couche de blocage et une surcouche de blocage,
- chaque couche métallique fonctionnelle 40, 80 est au contact d'une sous-couche de blocage et d'une surcouche de blocage,
- l'épaisseur de chaque sous-couche et surcouche de blocage est d'au moins 0,4 nm, de préférence d'au moins 0,5 nm,
- l'épaisseur de la première sous-couche de blocage UB1 est par ordre de préférence croissant comprise de 1 à 2,5 nm, de 1,2 à 2,2 nm,
- l'épaisseur de la première surcouche de blocage OB1 est par ordre de préférence croissant comprise de 0,4 à 2 nm, de 0,5 à 1 nm,
- l'épaisseur de la seconde sous-couche de blocage UB2 est par ordre de préférence croissant comprise de 0,4 à 2 nm, de 0,5 à 1 nm,
- l'épaisseur de la seconde surcouche de blocage OB2 est par ordre de préférence croissant comprise de 0,4 à 2 nm, de 0,5 à 1 nm,
- l'épaisseur totale des couches de blocages est comprise entre 3 et 7 nm en incluant ces valeurs, de préférence entre 3 et 5 nm.

La première sous-couche de blocage et, si elles sont présentes, la première surcouche de blocage, la deuxième sous-couche de blocage et/ou la deuxième surcouche de blocage ont respectivement des épaisseurs UB1, OB1, UB2, OB2. Ces couches satisfont la relation suivante: UB1> 1,1* MAX(OB1, UB2, OB2). Cette relation signifie que l'épaisseur de la première sous-couche de blocage est d'au moins 10 % plus épaisse que chacune des sous-couches et surcouches de blocage pouvant être présentes dans l'empilement.

Selon des modes de réalisation avantageux de l'invention, les autres couches de blocage, c'est à dire la première surcouche de blocage, la deuxième sous-couche de blocage et/ou la deuxième surcouche de blocage, sont choisies parmi les couches métalliques à base d'un métal ou d'un alliage métallique, les couches de nitrure métallique et les couches d'oxynitrure métallique d'un ou plusieurs éléments choisis parmi le titane, le nickel, le chrome et le niobium telles que Ti, TiN, Nb, NbN, Ni, NiN, Cr, CrN, NiCr, NiCrN. Bien que ces couches de blocage soient déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, les revêtements antireflets satisfont une ou plusieurs des conditions suivantes :
- l'épaisseur du premier revêtement antireflet 20 est par ordre de préférence croissant comprise de 15 à 40 nm, de 15 à 30 nm,
- l'épaisseur du second revêtement antireflet 60 est par ordre de préférence croissant comprise de 40 à 90 nm, de 60 à 80 nm,
- l'épaisseur du troisième revêtement diélectrique 100 est par ordre de préférence croissant comprise de 15 à 50 nm, de 30 à 40 nm,
- les revêtements antireflets comprennent au moins une couche diélectrique à base d'oxyde ou de nitrure d'un ou plusieurs éléments choisis parmi le silicium, l'aluminium, l'étain, le zinc,
- le premier revêtement antireflet situé entre le substrat et la première couche métallique fonctionnelle ne comprend pas de couche diélectrique à base d'oxyde,
- le premier revêtement antireflet situé entre le substrat et la première couche métallique fonctionnelle comprend uniquement des couches diélectriques à base de nitrure d'un ou plusieurs éléments choisis parmi le silicium et l'aluminium,
- au moins un revêtement antireflet comprend au moins une couche diélectrique à fonction barrière,
- chaque revêtement antireflet comprend au moins une couche diélectrique à fonction barrière,
- les couches diélectriques à fonction barrière sont de préférence à base de composés de silicium choisis parmi les oxydes tels que SiO₂, les nitrures de silicium Si₃N₄ et les oxynitrures SiOₓN_{y}, et comprennent éventuellement au moins un autre élément, comme l'aluminium, le hafnium et le zirconium,
- au moins un revêtement antireflet comprend au moins une couche absorbante,
- au moins un revêtement antireflet comprend au moins une couche diélectrique à fonction stabilisante,
- le deuxième et le troisième revêtement antireflet comprennent chacun au moins une couche diélectrique à fonction stabilisante,
- les couches diélectriques à fonction stabilisante sont de préférence à base d'oxyde cristallisé, notamment à base d'oxyde de zinc, éventuellement dopé à l'aide d'au moins un autre élément, comme l'aluminium,
- la deuxième couche fonctionnelle est au-dessus d'un revêtement antireflet dont la couche supérieure est une couche diélectrique à fonction stabilisante, de préférence à base d'oxyde de zinc et/ou en-dessous d'un revêtement antireflet dont la couche inférieure est une couche diélectrique à fonction stabilisante.

Les empilements de l'invention peuvent comprendre des couches diélectriques à fonction barrière. On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrière sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

Les couches diélectriques à fonction barrière sont de préférence à base de composés de silicium. Les couches diélectriques à fonction barrière peuvent être aussi à base de composés d'aluminium choisis parmi les oxydes tels que Al₂O₃, les nitrures d'aluminium AIN et les oxynitrures AlOₓN_{y},de. La présence des couches diélectriques à fonction barrière est particulièrement avantageuse pour les empilements de couches minces à bomber/tremper.

Les empilements de l'invention peuvent comprendre au moins une couche absorbante dans le visible. Selon l'invention, ces couches absorbantes sont séparées de chaque couche de blocage par au moins une couche diélectrique. Ces couches absorbantes ne peuvent donc pas être confondues avec la première sous-couche de blocage absorbante. Une telle couche absorbante est de préférence insérée dans le revêtement antireflet situé entre les deux couches métalliques fonctionnelles. Elle peut être est choisie parmi les couches métalliques à base d'un métal, d'un alliage métallique ou les couches de nitrure métallique, d'un ou plusieurs éléments choisis parmi le titane, le niobium, le nickel et/ou le chrome telle qu'une couche de Ti, TiN, Nb, NbN, NiCr, NiCrN, Cr, CrN. Dans un mode de réalisation avantageux, la couche absorbante dans le visible est insérée entre deux couches à base de nitrure d'un ou plusieurs éléments choisis parmi le silicium et l'aluminium.

Les empilements de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La couche diélectrique à fonction stabilisante est de préférence à base d'oxyde choisi parmi l'oxyde de zinc, l'oxyde d'étain, l'oxyde de zirconium ou un mélange d'au moins deux d'entre eux. La ou les couches diélectriques à fonction stabilisante sont de préférence des couches d'oxyde de zinc.

La ou les couches diélectriques à fonction stabilisante peuvent notamment se trouver directement au contact d'une couche fonctionnelle ou séparées par une couche de blocage.

Cette couche diélectrique à fonction stabilisante peut avoir une épaisseur d'au moins 5 nm, notamment une épaisseur comprise entre 5 et 25 nm.

L'empilement peut comprendre une couche supérieure de protection déposée comme dernière couche de l'empilement notamment pour conférer des propriétés anti-rayures. Ces couches supérieures de protection ne sont pas considérées comme comprises dans un revêtement antireflet. Ces couches sont en général ultra-minces et ont notamment une épaisseur comprise entre 2 et 5 nm. La couche de protection peut par exemple être choisie parmi une couche d'oxyde de titane, une couche d'oxyde de zinc et d'étain ou une couche d'oxyde de titane et de zirconium.

Un mode de réalisation particulièrement avantageux concerne un substrat comprenant un empilement défini en partant du substrat transparent comprenant :
- un premier revêtement antireflet comprenant au moins une couche diélectrique à base d'un nitrure non oxydé d'un ou plusieurs éléments choisis parmi le silicium et l'aluminium,
- une première sous-couche de blocage absorbante présentant une épaisseur supérieure à 1 nm,
- une première couche fonctionnelle,
- une première surcouche de blocage,
- un deuxième revêtement antireflet comprenant au moins une couche diélectrique à fonction barrière et au moins une couche diélectrique à fonction stabilisante,
- une deuxième sous-couche de blocage,
- une deuxième couche fonctionnelle,
- une deuxième surcouche de blocage,
- un troisième revêtement antireflet comprenant au moins une couche diélectrique à fonction stabilisante et au moins une couche diélectrique à fonction barrière.

Un autre mode de réalisation particulièrement avantageux concerne un substrat comprenant un empilement défini en partant du substrat transparent comprenant :
- un premier revêtement antireflet comprenant au moins une couche diélectrique à base d'un nitrure non oxydé d'un ou plusieurs éléments choisis parmi le silicium et l'aluminium,
- une première sous-couche de blocage absorbante présentant une épaisseur supérieure à 1 nm,
- une première couche fonctionnelle,
- une première surcouche de blocage,
- un deuxième revêtement antireflet comprenant au moins une première couche diélectrique à fonction barrière, au moins une couche absorbante, au moins une deuxième couche diélectrique à fonction barrière et au moins une couche diélectrique à fonction stabilisante,
- une deuxième sous-couche de blocage,
- une deuxième couche fonctionnelle,
- une deuxième surcouche de blocage,
- un troisième revêtement antireflet comprenant au moins une couche diélectrique à fonction stabilisante et au moins une couche diélectrique à fonction barrière.

Selon des modes de réalisation avantageux, le vitrage selon l'invention présente une transmission lumineuse inférieure à 50 %, de préférence comprise entre 35 et 50 %, voire comprise entre 40 et 45 %. Le vitrage de l'invention présente également avantageusement une réflexion lumineuse côté extérieur inférieure à 18 %, de préférence inférieure à 15 %.

Les substrats transparents selon l'invention sont de préférence en un matériau rigide minéral comme les substrats en verre ou choisi parmi les substrats polymériques tels que les substrats en polyéthylène téréphtalate PET, en polyéthylène naphtalate PEN et en polycarbonate.

Les détails et caractéristiques avantageuses de l'invention ressortent des exemples non limitatifs suivants, illustrés à l'aide de la figure jointe.

Les proportions entre les différents éléments ne sont pas respectées afin de faciliter la lecture des figures.

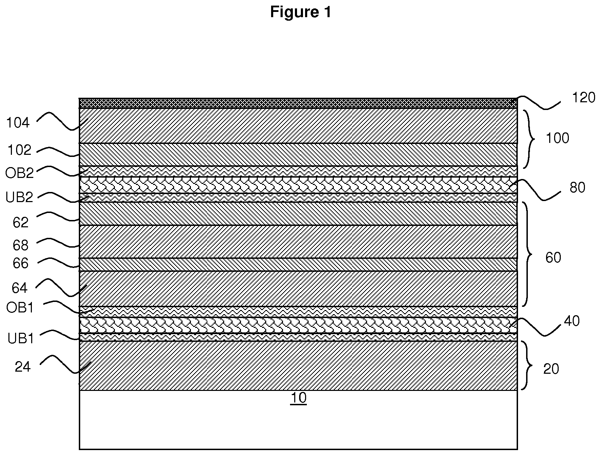

La figure 1 illustre une structure d'empilement à deux couches métalliques fonctionnelles 40 et 80 déposée sur un substrat 10 verrier, transparent. Chaque couche fonctionnelle 40, 80 est disposée entre deux revêtements antireflet 20, 60, 100 de telle sorte que :
- la première couche fonctionnelle 40 en partant du substrat est disposée entre les revêtements antireflets 20, 60, et
- la deuxième couche fonctionnelle 80 est disposée entre les revêtements antireflets 60, 100.

Chaque couche fonctionnelle 40, 80 est déposée au-dessus d'une sous-couche UB1, UB2 et au-dessous d'une surcouche OB1, OB2 de blocage.

Ces revêtements antireflets 20, 60, 100 comportent chacun au moins une couche antireflet diélectrique 24 ; 62, 64, 68 ; 102, 104. Le revêtement antireflet situé entre deux couches fonctionnelles comprend une couche absorbante 66. L'empilement comprend également une couche supérieure de protection 120.

### Exemples

### I. Préparation des substrats : Empilements, conditions de dépôt et traitements thermiques

Des empilements de couches minces définis ci-après sont déposés sur des substrats en verre sodo-calcique clair d'une épaisseur de 6 mm.

Dans les exemples de l'invention :
- les couches fonctionnelles sont des couches d'argent (Ag),
- les couches de blocage sont des couches métalliques en alliage de nickel et de chrome (NiCr),
- les couches barrières sont à base de nitrure de silicium, dopé à l'aluminium (Si₃N₄ : Al),
- les couches stabilisantes sont en oxyde de zinc (ZnO),
- les couches absorbantes sont en nitrure de niobium (NbN).

Les conditions de dépôt des couches, qui ont été déposées par pulvérisation (pulvérisation dite « cathodique magnétron »), sont résumées dans le tableau 1.

| Tableau 1 | Cible employée | Pression de dépôt | Gaz | Indice 550 nm |
|---|---|---|---|---|
| Si₃N₄ | Si:AI à 92:8 % en poids | 3,2.10⁻³ mbar | Ar /(Ar + N2) à 55 % | 2,00-2,10 |
| ZnO | Zn:Al à 98:2 % en poids | 1,8.10⁻³ mbar | Ar /(Ar + 02) à 63 % | 1,95 |
| NbN | Nb | 5.10⁻³ mbar | Ar/N₂ : 4/3 | - |
| NiCr | Ni (80% at.) : Cr (20% at.) | 2-3.10⁻³ mbar | Ar à 100 % | - |
| Ag | Ag | 3.10⁻³ mbar | Ar à 100 % | - |

| | | | | |
|---|---|---|---|---|
| At. = atomique | | | | |

Le tableau 2 liste les matériaux et les épaisseurs physiques en nanomètres (sauf autre indication) de chaque couche ou revêtement qui constitue les empilements en fonction de leurs positions vis-à-vis du substrat porteur de l'empilement (dernière ligne en bas du tableau). Les épaisseurs données dans le tableau 2 correspondent aux épaisseurs avant trempe.

Les substrats subissent une trempe thermique dans les conditions suivantes : traitement thermique pendant 5 à 15 minutes à une température comprise entre 600 et 750°C.

### II. Performances « contrôle solaire » et colorimétrie

Le tableau 3 ci-dessous liste les principales caractéristiques optiques mesurées lorsque les vitrages font parties de double vitrage de structure 6/12/6 : verre de 6 mm / espace intercalaire de 12 mm rempli d'air / verre de 6 mm, l'empilement étant positionné en face 2 (la face 1 du vitrage étant la face la plus à l'extérieur du vitrage, comme habituellement).

Pour ces doubles vitrages,
- TL indique : la transmission lumineuse dans le visible en %, mesurée selon l'illuminant D65 à 2° Observateur ;
- a*T et b*T indiquent les couleurs en transmission a* et b* dans le système L*a*b* mesurées selon l'illuminant D65 à 2° Observateur et mesurées perpendiculairement au vitrage ;
- RLext indique : la réflexion lumineuse dans le visible en %, mesurée selon l'illuminant D65 à 2° Observateur du côté de la face la plus à l'extérieur, la face 1 ;
- a*Rext et b*Rext indiquent les couleurs en réflexion a* et b* dans le système L*a*b* mesurées selon l'illuminant D65 à 2° Observateur du côté de la face la plus à l'extérieur et mesurées ainsi perpendiculairement au vitrage.

| **Tableau 2** | **Réf.** | **Comp1** | **Comp2** | **Comp 3** | **Comp4** | **Comp5** | **Inv1** | **Inv2** | **Inv3** | **Inv4** | **Inv5** | **Inv6** |
|---|---|---|---|---|---|---|---|---|---|---|---|---|
| Couche de protection : | 120 | | | | | | | | | | | |
| TiO2 ou SnZnO | | 1,5 | 5 | 2 | 2 | 2 | 2 | 2 | 2 | 2 | 2 | 2 |
| Revêtement antireflet | 100 | | | | | | | | | | | |
| - Si3N4 | 104 | 27,3 | 23 | 30,5 | 30,5 | 30,5 | 30,5 | 30,5 | 30,5 | 30,5 | 30,5 | 30,5 |
| - ZnO | 102 | 4,5 | 5 | 5 | 5 | 5 | 5 | 5 | 5 | 5 | 5 | 5 |
| Couche blocage NiCr | OB2 | 0,6 | 1 | 0,9 | 1,17 | 1,08 | 0,9 | 0,9 | 0,9 | 0,9 | 0,9 | 1,8 |
| Couche fonctionnelle Ag | 80 | 12,8 | 17 | 12,5 | 12,5 | 12,5 | 12,5 | 12,5 | 12,5 | 12,5 | 12,5 | 12,5 |
| Couche blocage NiCr | UB2 | 1 | - | 0,9 | 1,17 | 1,08 | 0,9 | 0,9 | 0,9 | 0,9 | 1,8 | 0,9 |
| Revêtement antireflet | 60 | | | | | | | | | | | |
| - ZnO | 62 | 5,2 | 5 | 5 | 5 | 5 | 5 | 5 | 5 | 5 | 5 | 5 |
| - Si3N4 | 68 | 35,2 | 34 | 42 | 42 | 42 | 48,4 | 42 | 42 | 42 | 42 | 42 |
| - NbN | 66 | 1,4 | 1 | 2,6 | 2,6 | 2,6 | 4,4 | 2,6 | 2,6 | 2,6 | 2,6 | 2,6 |
| - Si3N4 | 64 | 40,3 | 34 | 22 | 22 | 22 | 22 | 22 | 22 | 22 | 22 | 22 |
| - ZnO | - | 4,5 | 6 | - | - | - | - | - | - | - | - | - |
| Couche blocage NiCr | OB1 | 0,8 | 0,6 | 1 | 1 | 1,2 | 1 | 1 | 0,5 | 2 | 1 | 1 |
| Couche fonctionnelle Ag | 40 | 9,6 | 5,5 | 11,3 | 11,3 | 11,3 | 11,3 | 11,3 | 11,3 | 11,3 | 11,3 | 11,3 |
| Couche blocage NiCr | UB1 | 3 | - | 0,8 | 0,64 | 0,64 | 1,6 | 2,4 | 1,6 | 1,6 | 1,6 | 1,6 |
| Revêtement antireflet | 20 | | | | | | | | | | | |
| - ZnO | - | 4,7 | 6 | - | - | - | - | - | - | - | - | - |
| - Si3N4 | 24 | 15,4 | 14,5 | 26,4 | 26,4 | 26,4 | 26,4 | 26,4 | 26,4 | 26,4 | 26,4 | 26,4 |
| Substrat verre (mm) | 10 | 6 | 6 | 6 | 6 | 6 | 6 | 6 | 6 | 6 | 6 | 6 |

| **Tableau 3** | **Valeur cible** | **Comp1** | **Comp2** | **Comp3** | **Comp4** | **Comp5** | **Inv1** | **Inv2** | **Inv3** | **Inv4** | **Inv5** | **Inv6** |
|---|---|---|---|---|---|---|---|---|---|---|---|---|
| Facteurs solaire « g » | ≤0,280 | 0,237 | 0,276 | 0,289 | 0,285 | 0,284 | 0,272 | 0,257 | 0,280 | 0,257 | 0,263 | 0,262 |
| Sélectivité « s » | > 1,5 | 1,69 | 1,81 | 1,61 | 1,62 | 1,61 | 1,59 | 1,57 | 1,61 | 1,57 | 1,58 | 1,59 |
| Couleur en transmission | | | | | | | | | | | | |
| - TL% | ≈40% | 40,00 | 50,00 | 46,54 | 46,11 | 45,76 | 43,38 | 40,51 | 45,04 | 40,31 | 41,70 | 41,66 |
| - a*T | <0 | -7,10 | -8,10 | -5,79 | -6,07 | -5,96 | -5,73 | -5,67 | -5,79 | - 5,61 | - 6,08 | -6,23 |
| - b*T | <0 | +1,1 | +0,60 | -0,93 | -1,03 | -1,1 | -1,57 | -2,12 | -1,27 | -2,11 | -2,10 | -1,94 |
| Couleur en réflexion | | | | | | | | | | | | |
| - RLext% | <18 | 20,00 | 18,00 | 13,45 | 12,95 | 13,32 | 14,15 | 14,91 | 13,48 | 15,58 | 13,69 | 13,40 |
| - a*Rext | <0 | -4,00 | -3,00 | -0,58 | +0,77 | +0,16 | -1,00 | -1,33 | -0,62 | -1,62 | +0,46 | +1,32 |
| - b*Rext | <0 | -5,00 | -9,00 | -4,32 | -5,31 | -4,87 | -4,35 | -4,31 | -4,65 | -3,76 | -5,42 | -6,57 |
| UB1 > 1 nm | - | non | non | non | non | non | oui | oui | oui | oui | oui | oui |
| UB1 | | 3 | 0 | 0,8 | 0,64 | 0,64 | 1,6 | 2,4 | 1,6 | 1,6 | 1,6 | 1,6 |
| 1,1* Max (OB1, UB2, OB2) | | 1,1 | 1,1 | 1,1 | 1,29 | 1,32 | 1,1 | 1,1 | 0,99 | 2,2 | 1,98 | 1,98 |
| UB1 > 1,1*Max (OB1, UB2, OB2) | | Oui | Non | Non | Non | Non | Oui | Oui | Oui | Non | Non | Non |

| | | | | | | | | | | | | |
|---|---|---|---|---|---|---|---|---|---|---|---|---|
| Max (OB1, UB2, OB2) : Correspond à l'épaisseur de la couche de blocage la plus épaisse choisie parmi les surcouches de blocage et la deuxième sous-couche de blocage. UB1 > 1,1 * Max (OB1, UB2, OB2) : Correspond à la caractéristique selon laquelle la première sous couche de blocage présente une épaisseur supérieure à celle de chacune des autres sous-couche ou surcouches de blocages. | | | | | | | | | | | | |

Selon l'invention, il est possible de réaliser un vitrage comprenant un empilement à deux couches fonctionnelles métalliques qui présente une transmission lumineuse d'environ 40 %, une sélectivité élevée, une réflexion lumineuse et un facteur solaire faible ainsi qu'un excellent compromis pour les couleurs en transmission et en réflexion extérieure.

L'utilisation du vitrage comme double vitrage monté de sorte que le substrat correspondant à la paroi extérieure comprenne en face 2 l'empilement avec une couche de blocage épaisse et absorbante au-contact de la première couche fonctionnelle métallique concourent à l'obtention de ces meilleurs résultats.

Les exemples selon l'invention présentent tous une coloration en transmission agréable et douce, de préférence dans la gamme des bleus ou bleus-verts.

Les exemples comparatifs 1 et 2 ne comprenant pas de couche de blocage absorbante sous la première couche fonctionnelle présentent une réflexion extérieure élevée notamment supérieure ou égale à 18 % et des couleurs en transmission non satisfaisantes se traduisant par des valeurs de b* positives.

Les exemples comparatifs 3, 4 et 5 ne comprenant pas une couche de blocage UB1 d'épaisseur suffisante ne présentent pas des valeurs de facteur solaire inférieures ou égales à 0,280. De plus, les couleurs en réflexion coté extérieur des exemples comparatifs 4 et 5 ne sont pas non plus satisfaisantes notamment les valeurs de b* sont positives. Ces derniers exemples montrent que l'utilisation de couches de blocage épaisses autour de la deuxième couche fonctionnelle plutôt qu'en dessous de la première couche fonctionnelle ne permet pas d'obtenir les résultats de l'invention. La présence d'une couche de blocage épaisse entre le substrat et la première couche fonctionnelle ne résulte donc pas d'un choix arbitraire.

Les vitrages selon l'invention présentent à la fois un facteur solaire inférieur ou égal à 0,280 et une sélectivité supérieure à 1,50. Ces vitrages présentent en plus une réflexion extérieure au moins inférieure à 18 %, voire inférieure à 15 %. Ces vitrages ont également des couleurs en transmission plus neutres se traduisant notamment par des valeurs de a* comprises entre -7 et -3 ainsi que des valeurs de b* toutes négatives et comprises entre -6 et -1.

Enfin, les exemples 1 à 3 illustrant les modes de réalisation particulièrement avantageux de l'invention satisfaisant notamment la relation UB1 > 1,1 Max (OB1, UB2 ou OB2) présentent en plus des couleurs en réflexion extérieure plus neutres se traduisant notamment par des valeurs de a* toutes négatives ainsi que des valeurs de b* toutes négatives et comprises entre -6 et -1.

## Revendications

1. Vitrage comprenant un substrat transparent (10) revêtu d'un empilement de couches minces comportant successivement à partir du substrat une alternance de deux couches métalliques fonctionnelles à base d'argent (40, 80) et de trois revêtements antireflets (20, 60, 100), chaque revêtement antireflet comportant au moins une couche diélectrique, de manière à ce que chaque couche métallique fonctionnelle (40, 80) soit disposée entre deux revêtements antireflets (20, 60, 100), **caractérisé en ce que** :
- les deux couches métalliques fonctionnelles correspondent à la première (40) et à la deuxième couche fonctionnelle métallique (80) définies en partant du substrat, l'épaisseur de la deuxième couche métallique fonctionnelle (80) est supérieure à celle de la première couche métallique fonctionnelle (40),
- la première couche métallique fonctionnelle (40) est au contact d'une sous-couche de blocage, appelée première sous-couche de blocage,
- la première sous-couche de blocage est une couche absorbante présentant une épaisseur supérieure à 1 nm,
- la première sous-couche de blocage est située au contact d'une couche diélectrique à base d'un nitrure non oxydé d'un ou plusieurs éléments choisis parmi le silicium et l'aluminium,
- la première sous-couche de blocage et, si elles sont présentes, la première surcouche de blocage, la deuxième sous-couche de blocage et/ou la deuxième surcouche de blocage ont respectivement des épaisseurs UB1, OB1, UB2, OB2 satisfaisant la relation suivante : UB1> 1,1*MAX(OB1, UB2, OB2).

2. Vitrage comprenant un substrat transparent (10) revêtu d'un empilement de couches minces comportant successivement à partir du substrat une alternance de deux couches métalliques fonctionnelles à base d'argent (40, 80) et de trois revêtements antireflets (20, 60, 100), chaque revêtement antireflet comportant au moins une couche diélectrique, de manière à ce que chaque couche métallique fonctionnelle (40, 80) soit disposée entre deux revêtements antireflets (20, 60, 100), **caractérisé en ce que** :
- les deux couches métalliques fonctionnelles correspondent à la première (40) et à la deuxième couche fonctionnelle métallique (80) définies en partant du substrat, l'épaisseur de la deuxième couche métallique fonctionnelle (80) est supérieure à celle de la première couche métallique fonctionnelle (40),
- la première couche métallique fonctionnelle (40) est au contact d'une sous-couche de blocage, appelée première sous-couche de blocage,
- la première sous-couche de blocage est une couche absorbante présentant une épaisseur supérieure à 1 nm,
- la première sous-couche de blocage est située au contact d'une couche diélectrique à base d'un nitrure non oxydé d'un ou plusieurs éléments choisis parmi le silicium et l'aluminium,
à l'exclusion des substrats de verre de 1 à 10 mm d'épaisseur comprenant en partant du substrat les empilements suivants :
SixNy : 25,0 - 45,0 nm,
NiCr ou NiCrN : 1,1 - 2,0 nm,
Ag : 3,0-7,0 nm,
NiCr ou NiCrN : 1,1 -2,0 nm,
SixNy : 65,0 - 110,0 nm,
NiCr ou NiCrN : 0,9 - 2,0 nm,
Ag : 11,0 - 18,0 nm,
NiCr ou NiCrN : 0,9 - 2,0 nm,
SixNy : 25,0 - 34,0 nm,
ZrO : 2,5 - 5,0 nm
et
SixNy : 25,0 - 45,0 nm,
NiCr ou NiCrN : 1,1 - 2,0 nm,
Ag : 11,0 - 14,5 nm,
NiCr ou NiCrN : 1,1 - 2,0 nm,
SixNy : 70,0 - 110,0 nm,
NiCr ou NiCrN : 1,1-2,0 nm,
Ag : 15,0-21,5 nm,
NiCr ou NiCrN : 1,0 - 2,0 nm,
SixNy : 25,0 - 34,0 nm,
ZrO : 2,5 - 5,0 nm.

3. Vitrage selon la revendication précédente, **caractérisé en ce que** la première sous-couche de blocage et, si elles sont présentes, la première surcouche de blocage, la deuxième sous-couche de blocage et/ou la deuxième surcouche de blocage ont respectivement des épaisseurs UB1, OB1, UB2, OB2 satisfaisant la relation suivante : UB1> 1,1*MAX(OB1, UB2, OB2).

4. Vitrage selon l'une des revendications précédentes, **caractérisé en ce que** chaque couche métallique fonctionnelle (40, 80) est au contact d'au moins une couche de blocage choisie parmi une sous-couche de blocage et une surcouche de blocage.

5. Vitrage selon l'une des revendications précédentes, **caractérisé en ce que** chaque couche métallique fonctionnelle (40, 80) est au contact d'une sous-couche de blocage et d'une surcouche de blocage.

6. Vitrage selon l'une des revendications précédentes, **caractérisé en ce que** la première sous-couche de blocage absorbante est choisie parmi les couches métalliques, les couches de nitrure métallique d'un ou plusieurs éléments choisis parmi le titane, le nickel, le chrome et le niobium telles qu'une couche de Ti, TiN, Nb, NbN, Ni, NiN, Cr, CrN, NiCr, NiCrN.

7. Vitrage selon l'une des revendications précédentes, **caractérisé en ce que** la première surcouche de blocage, la deuxième sous-couche de blocage et/ou la deuxième surcouche de blocage, si elles sont présentes, sont choisies parmi les couches métalliques à base d'un métal ou d'un alliage métallique, les couches de nitrure métallique et les couches d'oxynitrure métallique d'un ou plusieurs éléments choisis parmi le titane, le nickel, le chrome et le niobium telles que Ti, TiN, Nb, NbN, Ni, NiN, Cr, CrN, NiCr, NiCrN.

8. Vitrage selon l'une des revendications précédentes, **caractérisé en ce que** le premier revêtement antireflet situé entre le substrat et la première couche métallique fonctionnelle comprend uniquement des couches diélectriques à base de nitrure d'un ou plusieurs éléments choisis parmi le silicium et l'aluminium.

9. Vitrage selon l'une quelconque des revendications précédentes, **caractérisé en ce que** l'empilement comprend en outre au moins une couche absorbante dans le visible séparée de chaque couche de blocage par au moins une couche diélectrique.

10. Vitrage selon la revendication 9 **caractérisé en ce que** la couche absorbante est insérée dans le revêtement antireflet situé entre les deux couches métalliques fonctionnelles.

11. Vitrage selon l'une quelconque des revendications 9 à 10 **caractérisé en ce que** la couche absorbante est choisie parmi les couches métalliques à base d'un métal, d'un alliage métallique ou les couches de nitrure métallique, d'un ou plusieurs éléments choisis parmi le titane, le niobium, le nickel et/ou le chrome telle qu'une couche de Ti, TiN, Nb, NbN, NiCr, NiCrN, Cr, CrN.

12. Vitrage selon l'une quelconque des revendications 9 à 11, **caractérisé en ce que** la couche absorbante dans le visible est insérée entre deux couches à base de nitrure d'un ou plusieurs éléments choisis parmi le silicium et l'aluminium.

13. Vitrage selon l'une quelconque des revendications précédente, **caractérisé en ce que** au moins un revêtement antireflet comprend au moins une couche diélectrique à fonction stabilisante à base d'oxyde cristallisé.

14. Vitrage selon l'une quelconque des revendications précédente, **caractérisé en ce que** le deuxième et le troisième revêtements antireflets comportent au moins une couche diélectrique à fonction stabilisante à base d'oxyde cristallisé, notamment à base d'oxyde de zinc, éventuellement dopé à l'aide d'au moins un autre élément, comme l'aluminium.

15. Vitrage selon l'une quelconque des revendications précédente, **caractérisé en ce que** l'empilement comprend une couche supérieure de protection déposée comme dernière couche de l'empilement choisie parmi une couche d'oxyde de titane, une couche d'oxyde de zinc et d'étain ou une couche d'oxyde de titane et de zirconium.

16. Vitrage selon l'une quelconque des revendications précédentes **caractérisé en ce qu'**il comprend un empilement défini en partant du substrat transparent comprenant :
- un premier revêtement antireflet comprenant au moins une couche diélectrique à base d'un nitrure non oxydé d'un ou plusieurs éléments choisis parmi le silicium et l'aluminium,
- une première sous-couche de blocage présentant une épaisseur supérieure à 1 nm,
- une première couche fonctionnelle,
- une première surcouche de blocage,
- un deuxième revêtement antireflet comprenant au moins un couche diélectrique à fonction barrière et au moins une couche diélectrique à fonction stabilisante,
- une deuxième sous-couche de blocage,
- une deuxième couche fonctionnelle,
- une deuxième surcouche de blocage,
- un troisième revêtement antireflet comprenant au moins une couche diélectrique à fonction stabilisante et au moins une couche diélectrique à fonction barrière.

17. Vitrage selon l'une quelconque des revendications précédentes **caractérisé en ce que** le substrat revêtu de l'empilement a subi un traitement thermique à une température élevée tel qu'une trempe, un recuit ou un bombage.

18. Vitrage selon l'une quelconque des revendications précédentes **caractérisé en ce que** l'empilement est positionné dans le vitrage de sorte que la lumière incidente provenant de l'extérieur traverse la première sous-couche de blocage avant de traverser la première couche métallique fonctionnelle.

19. Vitrage selon l'une quelconque des revendications précédentes, caractérisé en qu'il est sous forme de vitrage multiple du type double vitrage.

20. Vitrage selon l'une quelconque des revendications précédentes, caractérisé en qu'il présente une transmission lumineuse inférieure à 50 %, de préférence comprise entre 35 et 50 %, voire comprise entre 40 et 45 %, et/ou une réflexion lumineuse côté extérieur inférieure à 18 %, de préférence inférieure à 15 %.

## Patentansprüche

1. Verglasung, umfassend ein mit einem Stapel dünner Schichten beschichtetes transparentes Substrat (10), das ausgehend von dem Substrat aufeinanderfolgend eine Abfolge von zwei funktionellen metallischen Schichten auf Basis von Silber (40, 80) und von drei Antireflexionsbeschichtungen (20, 60, 100) beinhaltet, wobei jede Antireflexionsbeschichtung mindestens eine dielektrische Schicht derart beinhaltet, dass jede funktionelle metallische Schicht (40, 80) zwischen zwei Antireflexionsbeschichtungen (20, 60, 100) angebracht ist, **dadurch gekennzeichnet, dass:**
- die zwei funktionellen metallischen Schichten, am Substrat beginnend definiert, der ersten (40) und der zweiten funktionellen metallischen Schicht (80) entsprechen, die Dicke der zweiten funktionellen metallischen Schicht (80) größer ist als jene der ersten funktionellen metallischen Schicht (40),
- die erste funktionelle metallische Schicht (40) in Kontakt mit einer Blockier-Unterschicht steht, genannt erste Blockier-Unterschicht,
- die erste Blockier-Unterschicht eine absorbierende Schicht ist, die eine Dicke größer als 1 nm aufweist,
- die erste Blockier-Unterschicht in Kontakt mit einer dielektrischen Schicht auf Basis eines nicht oxidierten Nitrids eines oder mehrerer Elemente, ausgewählt aus Silicium und Aluminium, angeordnet ist,
- die erste Blockier-Unterschicht und, wenn sie vorhanden sind, die erste Blockier-Überschicht, die zweite Blockier-Unterschicht und/oder die zweite Blockier-Überschicht jeweils die Dicken UB1, OB1, UB2, OB2 aufweisen, die die folgende Beziehung erfüllen: UB1 > 1,1*MAX(OB1, UB2, OB2).

2. Verglasung, umfassend ein mit einem Stapel dünner Schichten beschichtetes transparentes Substrat (10), das ausgehend von dem Substrat aufeinanderfolgend eine Abfolge von zwei funktionellen metallischen Schichten auf Basis von Silber (40, 80) und von drei Antireflexionsbeschichtungen (20, 60, 100) beinhaltet, wobei jede Antireflexionsbeschichtung mindestens eine dielektrische Schicht derart beinhaltet, dass jede funktionelle metallische Schicht (40, 80) zwischen zwei Antireflexionsbeschichtungen (20, 60, 100) angebracht ist, **dadurch gekennzeichnet, dass:**
- die zwei funktionellen metallischen Schichten, am Substrat beginnend definiert, der ersten (40) und der zweiten funktionellen metallischen Schicht (80) entsprechen, die Dicke der zweiten funktionellen metallischen Schicht (80) größer ist als jene der ersten funktionellen metallischen Schicht (40),
- die erste funktionelle metallische Schicht (40) in Kontakt mit einer Blockier-Unterschicht steht, genannt erste Blockier-Unterschicht,
- die erste Blockier-Unterschicht eine absorbierende Schicht ist, die eine Dicke größer als 1 nm aufweist,
- die erste Blockier-Unterschicht in Kontakt mit einer dielektrischen Schicht auf Basis eines nicht oxidierten Nitrids eines oder mehrerer Elemente, ausgewählt aus Silicium und Aluminium, angeordnet ist,
mit Ausnahme von Glassubstraten von 1 bis 10 mm Dicke, umfassend, am Substrat beginnend, die folgenden Stapel:
SixNy: 25,0 - 45,0 nm,
NiCr oder NiCrN: 1,1 -2,0 nm,
Ag: 3,0-7,0 nm,
NiCr oder NiCrN: 1,1 - 2,0 nm,
SixNy: 65,0 - 110,0 nm,
NiCr oder NiCrN: 0,9 - 2,0 nm,
Ag: 11,0 - 18,0 nm,
NiCr oder NiCrN: 0,9 - 2,0 nm,
SixNy: 25,0 - 34,0 nm,
ZrO: 2,5 - 5,0 nm
und
SixNy: 25,0 - 45,0 nm,
NiCr oder NiCrN: 1,1 -2,0 nm,
Ag: 11,0 - 14,5 nm,
NiCr oder NiCrN: 1,1 -2,0 nm,
SixNy: 70,0 - 110,0 nm,
NiCr oder NiCrN: 1,1-2,0 nm,
Ag: 15,0-21,5 nm,
NiCr oder NiCrN: 1,0 - 2,0 nm,
SixNy: 25,0 - 34,0 nm,
ZrO: 2,5 - 5,0 nm.

3. Verglasung nach dem vorstehenden Anspruch, **dadurch gekennzeichnet, dass** die erste Blockier-Unterschicht und, wenn sie vorhanden sind, die erste Blockier-Überschicht, die zweite Blockier-Unterschicht und/oder die zweite Blockier-Überschicht jeweils die Dicken UB1, OB1, UB2, OB2 aufweisen, die die folgende Beziehung erfüllen: UB1 > 1,1*MAX(OB1, UB2, OB2).

4. Verglasung nach einem der vorstehenden Ansprüche, **dadurch gekennzeichnet, dass** jede funktionelle metallische Schicht (40, 80) mit mindestens einer Blockierschicht, ausgewählt aus einer Blockier-Unterschicht und einer Blockier-Überschicht, in Kontakt steht.

5. Verglasung nach einem der vorstehenden Ansprüche, **dadurch gekennzeichnet, dass** jede funktionelle metallische Schicht (40, 80) mit einer Blockier-Unterschicht und einer Blockier-Überschicht in Kontakt steht.

6. Verglasung nach einem der vorstehenden Ansprüche, **dadurch gekennzeichnet, dass** die erste absorbierende Blockier-Unterschicht ausgewählt ist aus metallischen Schichten, Metallnitridschichten eines oder mehrerer Elemente, ausgewählt aus Titan, Nickel, Chrom und Niob, wie einer Schicht von Ti, TiN, Nb, NbN, Ni, NiN, Cr, CrN, NiCr, NiCrN.

7. Verglasung nach einem der vorstehenden Ansprüche, **dadurch gekennzeichnet, dass** die erste Blockier-Überschicht, die zweite Blockier-Unterschicht und/oder die zweite Blockier-Überschicht, wenn sie vorhanden sind, ausgewählt sind aus metallischen Schichten auf Basis eines Metalls oder einer Metalllegierung, Metallnitridschichten und Metalloxynitridschichten eines oder mehrerer Elemente, ausgewählt aus Titan, Nickel, Chrom und Niob, wie Ti, TiN, Nb, NbN, Ni, NiN, Cr, CrN, NiCr, NiCrN.

8. Verglasung nach einem der vorstehenden Ansprüche, **dadurch gekennzeichnet, dass** die zwischen dem Substrat und der ersten funktionellen metallischen Schicht angeordnete erste Antireflexionsbeschichtung einzig dielektrische Schichten auf Basis von Nitrid eines oder mehrerer Elemente, ausgewählt aus Silicium und Aluminium, umfasst.

9. Verglasung nach einem der vorstehenden Ansprüche, **dadurch gekennzeichnet, dass** der Stapel des Weiteren mindestens eine von jeder Blockierschicht durch mindestens eine dielektrische Schicht getrennte im sichtbaren Bereich absorbierende Schicht umfasst.

10. Verglasung nach Anspruch 9, **dadurch gekennzeichnet, dass** die absorbierende Schicht in die zwischen den zwei funktionellen metallischen Schichten angeordnete Antireflexionsbeschichtung eingefügt ist.

11. Verglasung nach einem der Ansprüche 9 bis 10, **dadurch gekennzeichnet, dass** die absorbierende Schicht ausgewählt ist aus metallischen Schichten auf Basis eines Metalls, einer Metalllegierung oder Metallnitridschichten eines oder mehrerer Elemente, ausgewählt aus Titan, Niob, Nickel und/oder Chrom, wie einer Schicht von Ti, TiN, Nb, NbN, NiCr, NiCrN, Cr, CrN.

12. Verglasung nach einem der Ansprüche 9 bis 11, **dadurch gekennzeichnet, dass** die im sichtbaren Bereich absorbierende Schicht zwischen zwei Schichten auf Basis von Nitrid eines oder mehrerer Elemente, ausgewählt aus Silicium und Aluminium, eingefügt ist.

13. Verglasung nach einem der vorstehenden Ansprüche, **dadurch gekennzeichnet, dass** mindestens eine Antireflexionsbeschichtung mindestens eine dielektrische Schicht mit stabilisierender Funktion auf Basis kristallisierten Oxids umfasst.

14. Verglasung nach einem der vorstehenden Ansprüche, **dadurch gekennzeichnet, dass** die zweite und die dritte Antireflexionsbeschichtung mindestens eine dielektrische Schicht mit stabilisierender Funktion auf Basis kristallisierten Oxids, insbesondere auf Basis von Zinkoxid, gegebenenfalls mit mindestens einem anderen Element, wie Aluminium, dotiert, enthalten.

15. Verglasung nach einem der vorstehenden Ansprüche, **dadurch gekennzeichnet, dass** der Stapel eine als letzte Schicht des Stapels angebrachte obere Schutzschicht umfasst, ausgewählt aus einer Titanoxidschicht, einer Schicht aus Zink- und Zinnoxid oder einer Schicht aus Titan- und Zirkoniumoxid.

16. Verglasung nach einem der vorstehenden Ansprüche, **dadurch gekennzeichnet, dass** sie einen am transparenten Substrat beginnend definierten Stapel umfasst, umfassend:
- eine erste Antireflexionsbeschichtung, umfassend mindestens eine dielektrische Schicht auf Basis eines nicht oxidierten Nitrids eines oder mehrerer Elemente, ausgewählt aus Silicium und Aluminium,
- eine erste Blockier-Unterschicht, die eine Dicke größer als 1 nm aufweist,
- eine erste funktionelle Schicht,
- eine erste Blockier-Überschicht,
- eine zweite Antireflexionsbeschichtung, umfassend mindestens eine dielektrische Schicht mit Barrierefunktion und mindestens eine dielektrische Schicht mit stabilisierender Funktion,
- eine zweite Blockier-Unterschicht,
- eine zweite funktionelle Schicht,
- eine zweite Blockier-Überschicht,
- eine dritte Antireflexionsbeschichtung, umfassend mindestens eine dielektrische Schicht mit stabilisierender Funktion und mindestens eine dielektrische Schicht mit Barrierefunktion.

17. Verglasung nach einem der vorstehenden Ansprüche, **dadurch gekennzeichnet, dass** das beschichtete Substrat der Stapel einer thermischen Behandlung bei einer erhöhten Temperatur unterzogen wurde, wie einer Härtung, einem Tempern oder einem Biegen.

18. Verglasung nach einem der vorstehenden Ansprüche, **dadurch gekennzeichnet, dass** die Stapel in der Verglasung auf eine Weise positioniert wird, dass das von außen kommende einfallende Licht vor dem Durchqueren der ersten funktionellen metallischen Schicht die erste Blockier-Unterschicht durchquert.

19. Verglasung nach einem der vorstehenden Ansprüche, **dadurch gekennzeichnet, dass** sie in Form von Mehrfachverglasung des Typs Doppelverglasung gebildet wird.

20. Verglasung nach einem der vorstehenden Ansprüche, **dadurch gekennzeichnet, dass** sie eine Lichtdurchlässigkeit von weniger als 50 %, vorzugsweise im Bereich zwischen 35 und 50 %, sogar im Bereich zwischen 40 und 45 % und/oder eine Außenseiten-Lichtreflexion von weniger als 18 %, vorzugsweise weniger als 15 % aufweist.

## Claims

1. Glazing comprising a transparent substrate (10) coated with a stack of thin layers successively comprising, from the substrate, an alternation of two functional metallic layers based on silver (40, 80) and of three antireflection coatings (20, 60, 100), each antireflection coating comprising at least one dielectric layer, so that each functional metallic layer (40, 80) is positioned between two antireflection coatings (20, 60, 100), **characterized in that**:
- the two functional metallic layers correspond to the first 40 and to the second functional metallic layer 80 defined from the substrate, the thickness of the second functional metallic layer 80 is higher than that of the first functional metallic layer 40,
- the first functional metallic layer (40) is in contact with a blocking underlayer, known as first blocking underlayer,
- the first blocking underlayer is an absorbent layer exhibiting a thickness of greater than 1 nm,
- the first blocking underlayer is located in contact with a dielectric layer based on a nonoxidized nitride of one or more elements chosen from silicon and aluminium,
- the first blocking underlayer and, if present, the first blocking overlayer, the second blocking underlayer and/or the second blocking overlayer have respectively thickness UB1, OB1, UB2, OB2 satisfying the following relation:
UB1> 1.1* MAX(OB1, UB2, OB2).

2. Glazing comprising a transparent substrate (10) coated with a stack of thin layers successively comprising, from the substrate, an alternation of two functional metallic layers based on silver (40, 80) and of three antireflection coatings (20, 60, 100), each antireflection coating comprising at least one dielectric layer, so that each functional metallic layer (40, 80) is positioned between two antireflection coatings (20, 60, 100), **characterized in that**:
- the two functional metallic layers correspond to the first 40 and to the second functional metallic layer 80 defined from the substrate, the thickness of the second functional metallic layer 80 is higher than that of the first functional metallic layer 40,
- the first metallic functional layer (40) is in contact with one blocking underlayer, known as first blocking underlayer,
- the first blocking underlayer is an absorbent layer exhibiting a thickness of greater than 1 nm,
- the first blocking underlayer is located in contact with a dielectric layer based on a nonoxidized nitride of one or more elements chosen from silicon and aluminium,
with the exclusion of glass substrates of 1 to 10 nm thick comprising form the substrate the following stacks:
SixNy : 25.0 - 45.0 nm,
NiCr or NiCrN : 1.1 - 2.0 nm,
Ag : 3.0 - 7.0 nm,
NiCr or NiCrN : 1,1 - 2.0 nm,
SixNy : 65.0 - 110.0 nm,
NiCr or NiCrN : 0.9 - 2.0 nm,
Ag : 11.0 - 18.0 nm,
NiCr or NiCrN : 0.9 - 2.0 nm,
SixNy : 25.0 - 34.0 nm,
ZrO : 2.5 - 5.0 nm
and
SixNy : 25.0 - 45.0 nm,
NiCr or NiCrN : 1.1 - 2.0 nm,
Ag : 11.0 - 14.5 nm,
NiCr or NiCrN : 1.1 - 2.0 nm,
SixNy : 70.0 - 110.0 nm,
NiCr or NiCrN : 1.1 - 2.0 nm,
Ag : 15.0 - 21.5 nm,
NiCr or NiCrN : 1.1 - 2.0 nm,
SixNy : 25.0 - 34.0 nm,
ZrO : 2.5 - 5.0 nm.

3. Glazing according to the preceding claim, **characterized in that** the first blocking underlayer and, if they are present, the first blocking overlayer, the second blocking underlayer and/or the second blocking overlayer respectively have thicknesses UB1, OB1, UB2 and OB2 which satisfy the following relationship: UB1> 1.1* MAX(OB1, UB2, OB2).

4. Glazing according to one of the preceding claims, **characterized in that** each of the functional metallic layer (40, 80) is in contact with at least one blocking layer chosen from a blocking underlayer and a blocking overlayer.

5. Glazing according to one of the preceding claims, **characterized in that** each metallic functional layer (40, 80) is in contact with a blocking underlayer and with a blocking overlayer.

6. Glazing according to one of the preceding claims, **characterized in that** the first absorbent blocking underlayer is chosen from metallic layers or layers of metal nitride of one or more elements chosen from titanium, nickel, chromium and niobium, such as the layer of Ti, TiN, Nb, NbN, Ni, NiN, Cr, CrN, NiCr or NiCrN.

7. Glazing according to one of the preceding claims, **characterized in that** the first blocking overlayer, the second blocking underlayer and/or the second blocking overlayer, if they are present, are chosen from metallic layers based on a metal or on a metal alloy, layers of metal nitride and layers of metal oxynitride of one or more elements chosen from titanium, nickel, chromium and niobium, such as Ti, TiN, Nb, NbN, Ni, NiN, Cr, CrN, NiCr or NiCrN.

8. Glazing according to one of the preceding claims, **characterized in that** the first antireflection coating located between the substrate and the first metallic functional layer solely comprises dielectric layers based on nitride of one or more elements chosen from silicon and aluminium.

9. Glazing according to any one of the preceding claims, **characterized in that** the stack additionally comprises at least one layer which absorbs in the visible region separated from each blocking layer by at least one dielectric layer.

10. Glazing according to Claim 9, **characterized in that** the absorbent layer is inserted into the antireflection coating located between the two metallic functional layers.

11. Glazing according to any one of Claims 9 to 10, **characterized in that** the absorbent layer is chosen from metallic layers based on a metal or on a metal alloy or layers of metal nitride of one or more elements chosen from titanium, niobium, nickel and/or chromium, such as a layer of Ti, TiN, Nb, NbN, NiCr, NiCrN, Cr or CrN.

12. Glazing according to any one of Claims 9 to 11, **characterized in that** the layer which absorbs in the visible region is inserted between two layers based on nitride of one or more elements chosen from silicon and aluminium.

13. Glazing according to any one of the preceding claims, **characterized in that** at least one antireflection coating comprises at least one dielectric layer having a stabilizing function based on crystallised oxide.

14. Glazing according to any one of the preceding claims, **characterized in that** the second and the third antireflection coating comprise at least one dielectric layer having a stabilizing function based on crystalline oxide, in particular based on zinc oxide, optionally doped using at least one other element, such as aluminium.

15. Glazing according to any one of the preceding claims, **characterized in that** the stack comprise an upper protective layer deposited as the last layer of the stack chosen from a titanium oxide layer, a zinc and tin oxide layer or a titanium and zirconium oxide layer.

16. Glazing according to any one of the preceding claims, **characterized in that** it comprises a stack, defined starting from the transparent substrate, comprising:
- a first antireflection coating comprising at least one dielectric layer based on a nonoxidized nitride of one or more elements chosen from silicon and aluminium,
- a first blocking underlayer exhibiting a thickness of greater than 1 nm,
- a first functional layer,
- a first blocking overlayer,
- a second antireflection coating comprising at least one dielectric layer having a barrier function and at least one dielectric layer having a stabilizing function,
- a second blocking underlayer,
- a second functional layer,
- a second blocking overlayer,
- a third antireflection coating comprising at least one dielectric layer having a stabilizing function and at least one dielectric layer having a barrier function.

17. Glazing according to any one of the preceding claims, **characterized in that** the substrate coated with the stack has been subjected to a heat treatment at a high temperature, such as a tempering, an annealing or a bending.

18. Glazing according to any one of the preceding claims, **characterized in that** the stack is positioned in the glazing so that the incident light originating from the outside passes through the first blocking underlayer before passing through the first metallic functional layer.

19. Glazing according to any one of the preceding claims, charcterized in that it is in the form of a multiple glazing of the double glazing type.

20. Glazing according to any one of the preceding claims, **characterized in that** it exhibits a light transmission of less than 50%, preferably between 35% and 50%, indeed even of between 40% and 45%, and/or a light reflection on the external side of less than 18%, preferably of less than 15%.
